# EUROPEAN PATENT SPECIFICATION

(11) **EP 1 809 708 B1**
(45) Date of publication and mention of the grant of the patent: **26.03.2014**
(21) Application number: 05777854.0
(22) Date of filing: 07.09.2005
(51) Int. Cl.: C09D 5/03, C08J 7/04, C09D 123/00, C09D 5/46

(54) **METHOD FOR THERMO CHEMICAL TREATMENT AND NON-CONTINUOUS COATING OBTAINED THEREBY**
VERFAHREN ZUR THERMOCHEMISCHEN BEHANDLUNG SOWIE DIE DADURCH ERHALTENE NICHT GESCHLOSSENE BESCHICHTUNG
PROCEDE DE TRAITEMENT THERMOCHIMIQUE ET REVETEMENT NON CONTINU OBTENU PAR CE PROCEDE

(30) Priority: 08.09.2004 SE 0402160; 09.09.2004 US 608085 P
(43) Date of publication of application: 25.07.2007
(73) Proprietor: National Gummi AB, 30265 Halmstad (SE)
(72) Inventor: HALLIN, Stephan, S-302 65 Halmsatd (SE); FRITZ, Joakim, S-302 30 Halmstad (SE)
(74) Representative: Karlsson, Leif Gunnar Börje
(86) International application number: PCT/SE2005/001299
(87) International publication number: WO 2006/041362

(56) References cited:
- EP-A2- 0 472 268
- US-A- 5 183 613
- US-A- 5 306 537
- US-B1- 6 203 844
- US-B1- 6 203 844
- US-B1- 6 440 492
- US-B1- 6 440 492
- DATABASE WPI Section Ch, Week 198925 Thomson Scientific, London, GB; Class A17, AN 1989-184002 XP002668391, & JP 1 123837 A (BRIDGESTONE TIRE KK) 16 May 1989 (1989-05-16) & DATABASE EPODOC [Online] EUROPEAN PATENT OFFICE, THE HAGUE, NL; "Rubber product",
- DATABASE WPI Week 198343 Thomson Scientific, London, GB; AN 1983-797893 XP002668424, & JP 58 155918 A (ASAHI YUKIZAI KOGYO KK) 16 September 1983 (1983-09-16)
- DATABASE WPI Week 198925, Derwent Publications Ltd., London, GB; Class A17, AN 1989-184002, XP008137747 & JP 1 123 837 A (BRIDGESTONE TIRE KK) 16 May 1989

## Description

### FIELD OF THE INVENTION

This invention relates in general to a method of providing polymeric materials, and in particular to a method of providing extruded profiles of various polymeric materials, such as Ethylene Propylene Diene Monomer (EPDM) and/or Thermo-Plastic Elastomer (TPE), and compounds thereof, with a surface comprising at least partly a non-continuous coating of Ultra High Molecular Weight Polyethylene (UHMWPE) by thermo chemical treatment. Moreover, the present invention relates to a non-continuous coating obtained by such a method.

### BACKGROUND OF THE INVENTION

In various technical fields, such as metallurgy, ceramics, marine industry, transport industry, medical device industry, automotive industry, packaging industry, pharmaceuticals etc., there is a great demand for polymeric products with good characteristics, in respect of coefficient of friction, abrasion resistance, chemical resistance, oil resistance, ageing resistance, ozone resistance, surface temperature resistance, fatigue properties at elevated temperature, low absorption of water, low gas permeability, resistivity, adhesiveness in connection with glueing and lamination of the polymer, cracking resistance etc.

Various lubricants, such as graphite, various oils, and polytetraflouroethylene (PTFE) powder have been proposed in the prior art to fulfill the requirements of low coefficient of friction. However, these lubricants fail to satisfy a lot of other requirements needed with regard to such polymeric products, for instance abrasion resistance, chemical resistance, oil resistance, ageing, adhesiveness in connection with glueing and lamination of the polymer etc.

Ultra High Molecular Weight Polyethylene (UHMWPE) is a polymer with high performance in regard to the characteristics mentioned above and with an extremely high viscosity. One type of UHMWPE is produced in the form of a powder or micropowder with an average particle size diameter in the range of 100 to 200 microns. Due to the high viscosity UHMWPE cannot be processed by common methods used for ordinary thermoplastics. Furthermore, UHMWPE is conventionally not used or suited for coatings on polymeric material, due to low adhesion of UHMWPE on polymeric material. In fact the prior art dissuade the skilled artisan from using UHMWPE as a coating on polymeric material. For instance, in the 'Engineering Materials Handbook™, of ASMInternational, Rev. Ed. 1999, 2nd Vol., pp. 167ff it is disclosed that UHMWPE has a self-lubricating, non-stick surface, which implies that UHMWPE actually is generally not suitable for coatings on other materials as a coating will not stick to the other material.

In the prior art powder processing technology is a well-established technique to manufacture polymeric products comprising a coherent mixture of UHMWPE and other suitable polymeric material. Foil processing technology is a well-established technique to supply a coating of a polymer, such as polytetraflouroethylene (PTFE), with good properties in respect of the purpose to fulfill the requirements above. However, these techniques are accompanied by various problems. Up to this point UHMWPE is only used to manufacture products made solely of UHMWPE or to manufacture products made of coherent mixture of UHMWPE and other suitable polymeric material. For instance, US-A1-2004/0113318 discloses a butyl rubber composition containing UHMWPE homogenously dispersed within the composition in order to reduce friction and thus adhesion of the rubber to another material.

Powder processing technique involves cold compaction of the polymeric powders followed by "sintering" of the preforms at elevated temperatures. This process is used to manufacture products comprising a coherent mixture of UHMWPE powder and other suitable polymeric materials in powder form or solely UHMWPE and/or similar polymers, such as VHMWPE. The properties of such products are governed by a number of process variables employed during the compaction and sintering processes. At the point of compaction the polymeric powder is pressed in a closed die, which results in particle rearrangement, elastic deformation at contact points and finally compression of the material. This process has to be governed by exact compaction pressure and rate of application of pressure. This requires expensive and energy consuming compression facilities and compression supervision systems. After the compaction process the closed die is sintered in a sintering process, consisting of heat treatment of the compacted polymer product or the preform as per a well-defined temperature program. The sintering process is a delicate procedure since parameters, such as melting, coalescence, and crystallisation, have to be taken into consideration. All the parameters above have to be carefully balanced in accordance with powder characteristics, such as size, size distribution, surface of the particles, shape of the particles, powder flow, apparent density, tap density, compactibility etc. This processing technology is only able to manufacture polymeric products comprising a coherent mixture of UHMWPE and other suitable polymeric material. This means that the powder processing technique consumes large amounts of UHMWPE, compared to a coating technique, and is therefore not a preferred technique from an economical point of view.

Foil processing technology involves providing a polymeric product with a foil of a polymer, with good properties in respect of the purpose to fulfill the requirements above, such as PTFE, and/or similar polymers. To produce this foil there is a need for a separate foil manufacturing process. After the foil is manufactured, the foil is supplied on the polymeric product to be coated. Thereafter, the polymeric product, supplied with the foil, needs to be processed by a similar process as described above in accordance with the powder processing technique, that is compaction of the polymeric product by applying pressure to it followed by sintering of the polymeric product at elevated temperatures. This processing technology is only applicable on substantially plane or slightly curved surfaces, which severely limits the use of the foil technology. Furthermore, the coating obtainable by the foil process technology is prone to crack during use. It has not yet been possible to coat a polymeric product with a polymer powder with the same outstanding wearing, ageing and friction properties as UHMWPE. Neither has it been possible to coat a polymeric product with UHMWPE powder. In fact, as mentioned above, the prior art states the opposite, and dissuade the skilled artisan from using UHMWPE as a coating on polymeric material. Furthermore, the products obtainable by the foil technology lack adhesiveness in connection with glueing and lamination of the polymer.

US 6,440,492 discloses a laminate useful for seals, particularly for vehicle window seals that are flexible, wear resistant and have a low coefficient of friction. US 6,440,492 mentions coating a rubber with a crystalline polyolefin rubber, but states that this polyolefin fuses incompletely if the molecular weight is greater than about 3,000,000, and that compression is needed in these cases. Thus, not all polyolefins may be used in the process according to US 6,440,492. Also, the method according to US 6,440,492 is only able to produce a continuous laminate, with a thickness of at least 0.5 mm. Furthermore, Fig. 1 of US 6,440,492 clearly shows that the laminate not is integrated with the rubber. US 6,440,492 does not solve the problem of applying polyolefin on irregular surfaces, since said method produces laminates with a thickness impossible to adjust to irregular surfaces. Moreover, this coating is sensitive for cracking, and the method of producing rubber articles with this coating has to consider the thickness of the coating, which obstructs and make the manufacturing process more difficult.

Thus, there is a need for a new improved method for providing polymeric materials with a surface allowing for increased friction properties, cost-effectiveness, adhesiveness in connection with glueing and lamination, improved wearing properties, increased chemical resistance, enhanced oil resistance, improved ageing resistance, enhanced ozone resistance, increased surface temperature resistance, higher fatigue property at elevated temperature, low absorption of water, low gas permeability, increased resistivity, and/or the possibility to coat profiled surfaces.

### SUMMARY OF THE INVENTION

Accordingly, the present invention preferably seeks to mitigate, alleviate or eliminate the above-identified deficiencies in the art and disadvantages singly or in any combination and solves at least the above mentioned problems by providing a method, a non-continuous coating achieved by said method, and an extruded profile comprising said non-continuous coating according to the appended patent claims.

More particularly, the invention relates to a method of providing polymeric materials, and in particular a method of providing extruded profiles of various polymeric materials, such as Ethylene Propylene Diene Monomer (EPDM) and/or Thermo-Plastic Elastomer (TPE), and compounds thereof, with a surface comprising at least partly a non-continuous coating of Ultra High Molecular Weight Polyethylene (UHMWPE) by thermo chemical treatment. More particularly, the present invention relates to a coating obtained by such a method, and an extruded profile of including said coating.

Hence, according to a first aspect of the invention, a method of coating a polymeric material is provided comprising applying Ultra High Molecular Weight Polyethylene (UHMWPE) on the polymeric material, and co-curing the polymeric material together with UHMWPE.

According to a second aspect of the invention, a non-continuous coating on a polymeric material is provided comprising UHMWPE obtained by the method according to a first aspect of the invention.

Furthermore, according to a third aspect of the invention, an extruded profile of a polymeric material is provided having a non-continuous coating according the second aspect of the invention.

Moreover, according to a fourth aspect of the invention, a method of manufacturing an extruded profile of polymeric material according to the third aspect of the invention is provided, wherein the method comprises the steps of extruding the profile, curing the profile, and applying UHMWPE on the polymeric material prior to curing the profile.

Finally, according to a sixth aspect of the invention, a novel use of UHMWPE as a non-continuous coating on a polymeric material is provided for improving the properties of the polymeric material by the UHMWPE coating thereon, particularly with regard to its coefficient of friction, abrasion resistance, chemical resistance, oil resistance, ageing resistance, ozone resistance, surface temperature resistance, fatigue property at elevated temperature, absorption of water, low gas permeability, resistivity, adhesiveness in connection with glueing and lamination of the polymer, and/or cracking resistance.

According to a specific embodiment, the UHMWPE used in conjunction with the present invention is in the form of powder or specifically micropowder, for instance enabling especially thin non-continuous coatings.

### BRIEF DESCRIPTION OF THE DRAWINGS

These and other aspects, features and advantages of which the invention is capable of will be apparent and elucidated from the following description of embodiments of the present invention, reference being made to the accompanying drawings, in which
Fig. 1 is a schematic illustration of an embodiment of the invention with reference to an extruded profile,
Fig. 2 is an example of an extruded profile having a non-continuous coating, according to an embodiment of the invention, applied thereon, and
Fig. 3 is a flowchart of an embodiment of the method according to the present invention.

### DETAILED DESCRIPTION OF EMBODIMENTS

One embodiment of the method according to the present invention involves applying a powder of UHMWPE on a polymeric product, such as extruded profile, of various polymeric materials, such as Ethylene Propylene Diene Monomer (EPDM) and Thermo-Plastic Elastomer (TPE), by a continuous process.

The powder is applied on an optional surface of the extruded profile. Since the powder is applied in direct connection with the extrusion process, no pre-treatment is needed to obtain extremely good adherence between the powder and the polymeric product, such as an extruded profile.

In contrast to prior art, In the method of the present invention, there is no limitations regarding the molecular weight in respect of the powder of UHMWPE.

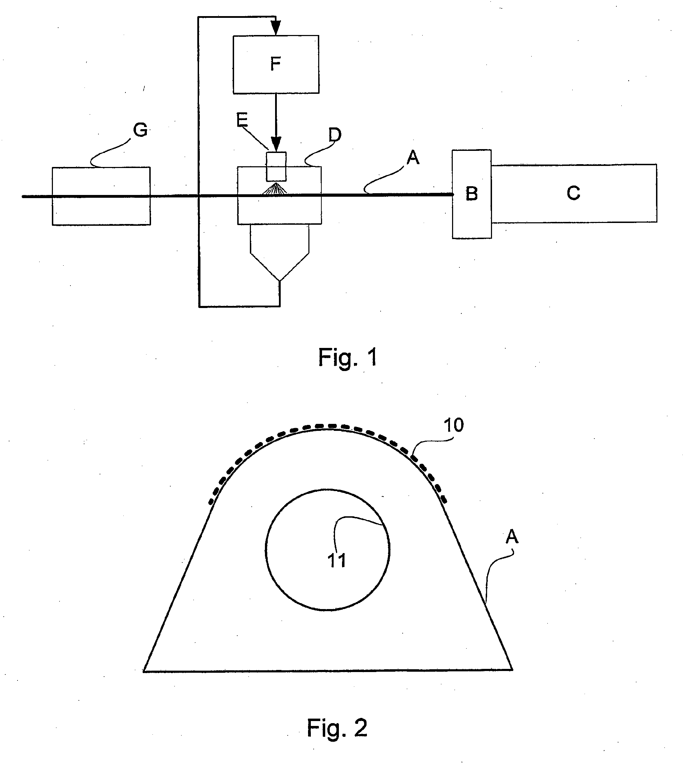

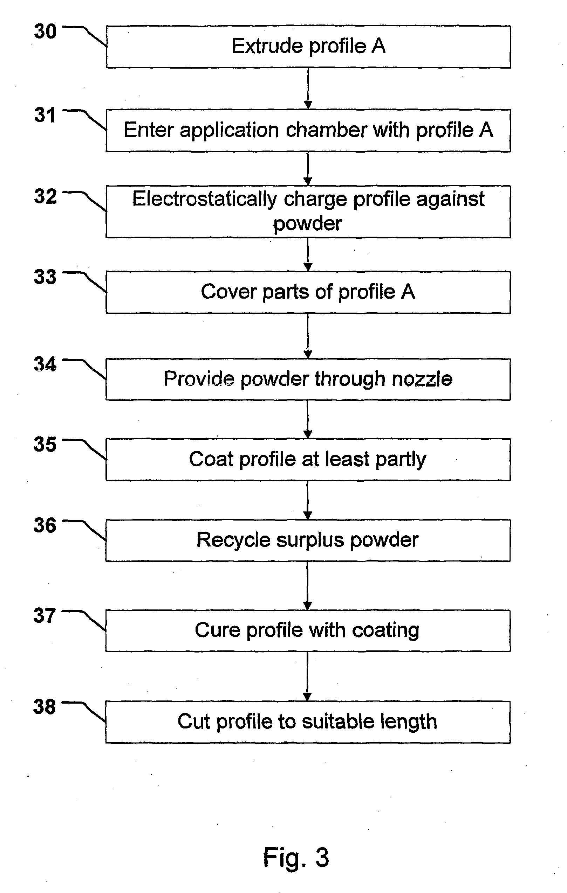

As illustrated in the schematic illustration of an embodiment of the invention of Fig. 1 in connection with reference to the flowchart given in Fig. 3, when an extruded profile A (step 30), for instance as shown in Fig. 2, leaves a mouthpiece B of an extrusion process C the extruded profile A enters an application chamber D (step 31), designed to apply a powder of UHMWPE on the extruded profile A.

At the time of entering the application chamber D the extruded profile A has a temperature in the interval of 50 to 100 °C, preferably in the interval of 50 to 80 °C, such as 60 to 70 °C. There is no need to further heat or pressurise the application chamber D. In the application chamber D the powder is provided through a nozzle E (step 34), from a source of fluidized powder F. The nozzle E may be in any suitable form that provides the powder in a way that satisfies the intended purpose of the coating process. If the intention is to provide a surface layer on the whole surface of the extruded profile A, then the nozzle may preferably spread the powder as much as possible in the application chamber D. If the intention of the coating process is to mainly apply the surface layer on one part of the extruded profile A, the nozzle E may direct the powder in the preferred direction. The amount of powder that is provided to the nozzle A, and thus to the application chamber D, which at least partly is applied (step 35) to the external surface of profile A, is among other parameters controlled by the amount and velocity of airflow conveying the fluidized powder into the chamber and the amount of powder within that flow.

Parts of the extruded profile A may also be covered (step 33) to exclude powder from adhering on the extruded profile A. This may be done by using brushes, screens and/or letting the extruded profile run on a conveyor belt. If the extruded profile A runs on a conveyor belt the underside of the extruded profile A will be protected from powder adherence while powder will adhere to the upper side of the extruded profile A.

Thereafter, the surplus of powder will be sucked (step 36) from the bottom of application chamber D back to the source of fluidized powder F, for instance by applying an appropriate underpressure in at least the lower part of chamber D. This will minimise the loss of powder, which will lead to a more economical process.

Optionally, the fluidized powder F or the profile A may be electrostatically charged (step 32) with reference to each other in order to further improve the adhesion of the powder to the profile A before curing, during or prior to application of the powder. More precisely, either the powder may be charged with a suitable polarity or the profile may be charged with a reverse polarity.

The method to provide a surface layer according to the present invention is not dependent on the extrusion process, and the extrusion process is not dependent on the method to provide a surface layer according to the present invention. It is easy to adjust the length of the application chamber D to suit the dwell time needed to fulfil the requirements of satisfactory application.

After the application chamber D the extruded profile enters a curing chamber G, where the extruded profile, partly or completely coated with powder, is cured (step 37). This curing process is performed in accordance with known technique in respect of curing polymeric materials. The person skilled in the art would know which temperatures, and what dwell time to use, to obtain a satisfactory curing. One example for a curing process is a sequence of quick microwave heating by means of magnetrons, then heating by means of hot air, and subsequent cooling. The total process may be viewed upon as a thermo chemical treatment process.

With the method according to the present invention a non-continuous coating is provided that is integrated with the extruded profile, i.e. the non-continuous coating provided satisfactory properties in respect of friction, wear resistance, etc., already as a non-continuous coating, in accordance with Fig. 2. According to the prior art it was not possible to manufacture such coatings of UHMWPE, and even less so if the molecular weight is high. Thus, the present invention has surprisingly shown that something is possible that prior art taught was not. After curing, the profile is cut into suitable lengths (step 38).

Fig. 2 shows an example of an extruded profile A in cross-section having a non-continuous coating 10, according to an embodiment of the invention, applied thereon. The profile is a non-limiting example of an extruded profile A, wherein the profile shown has a hollow portion delimited by line 11. It can be seen that the non-continuous coating 10 is provided on an irregular part (i.e. in this case not plane) of the outer surface of profile A.

The method according to the present invention provides the advantage, since the non-continuous coating has a negligible thickness, that it is possible to coat irregular surfaces, such as deep corners and nooks.

In another embodiment of the present invention the extruded profile A may first be exposed to the foil technology according to the prior art and thereafter enter the application chamber D. This enables the production of versatile customized profiles.

In this case one part of the extruded profile A will be coated by a foil and another part coated according to the coating process according to the present invention.

In still another embodiment of the present invention the powder is applied on an extruded profile to be coated, by other means than an application chamber D. The powder may for example be applied by means of sprinkling, painting, or brushing. Alternatively, the product may be coated by immersing the product into a bath of powder comprising UHMWPE. These procedures are naturally not as effective as the method according to other embodiments of the present invention, but may be of use for a person, or persons, lacking e.g. an application chamber according to other embodiments of the present invention.

Commercially available qualities suitable for the present non-continuous coating comprising UHMWPE in the form of powder or micropowder are available for instance from the Ticona corporation, a business of the Celanese AG, under the GUR^{®} family of products.

As UHMWPE is an excellent electrical insulator, one possible application of the present invention is to create electrically insulation regions on polymeric materials.

Further applications comprise for instance automotive or marine door gaskets having improved wear resistance, sealing lips e.g. for sliding-doors, all kinds of rubber gaskets in applications requiring enhanced and improved qualities, etc. Thanks to the fact that the non-continuous coating, as provided by embodiments of the invention has a negligible thickness, the design and manufacturing process of these profiles do not have to be specifically adapted to the coating improvement. This is not true for prior art coating methods, which e.g. are based on lamination techniques, where rather thick layers of coatings are provided, substantially necessitating a re-design of such profiles for specific applications.

An advantage of certain embodiments of the present invention is that it provides a method to apply a non-continuous surface layer comprising at least partly Ultra High Molecular Weight Polyethylene (UHMWPE) on different polymeric materials, such as Ethylene Propylene Diene Monomer (EPDM) and/or Thermo-Plastic Elastomer (TPE), and compounds thereof, which does not require expensive and energy consuming compression facilities and compression supervision systems.

A further advantage of certain embodiments of the present invention is that it provides a method to apply a non-continuous surface layer comprising at least partly of Ultra High Molecular Weight Polyethylene (UHMWPE) on different polymeric materials, such as Ethylene Propylene Diene Monomer (EPDM) and/or Thermo-Plastic Elastomer (TPE), and compounds thereof, which uses a lesser percentage of Ultra High Molecular Weight Polyethylene (UHMWPE) than technologies manufacturing polymeric products comprising a coherent mixture of UHMWPE and other suitable polymeric material.

Another advantage of certain embodiments of the present invention is that it provides a method to apply a non-continuous surface layer comprising at least partly of Ultra High Molecular Weight Polyethylene (UHMWPE) on different polymeric materials, such as Ethylene Propylene Diene Monomer (EPDM) and/or Thermo-Plastic Elastomer (TPE), and compounds thereof, which method is faster than the foil method according to the prior art, or which avoids a laminating process, and/or which provides thin advantageous non-continuous surface coatings on the polymeric materials.

Yet a further advantage of certain embodiments of the present invention is that it provides a method to apply a non-continuous surface layer comprising at least partly of Ultra High Molecular Weight Polyethylene (UHMWPE) on different polymeric materials, such as Ethylene Propylene Diene Monomer (EPDM) and/or Thermo-Plastic Elastomer (TPE), and compounds thereof, which method is combined with the foil method according to the prior art to obtain material that is partly coated by foil and partly by the non-continuous coating according to the present invention.

In addition, certain embodiments of the present invention that provide a method to apply a non-continuous surface layer comprising at least partly of Ultra High Molecular Weight Polyethylene (UHMWPE) on different polymeric materials, such as Ethylene Propylene Diene Monomer (EPDM) and/or Thermo-Plastic Elastomer (TPE), and compounds thereof, which method is applicable on profiled surfaces.

Furthermore certain embodiments of the present invention provide a non-continuous coating of Ultra High Molecular Weight Polyethylene (UHMWPE) on polymeric materials, which non-continuous coating does not crack or break when subjected to repeated or strong shearing forces.

Moreover, certain embodiments of the present invention provide a non-continuous coating of Ultra High Molecular Weight Polyethylene (UHMWPE) that is applicable on both planar and irregular surfaces.

Furthermore, certain embodiments of the present invention provide a non-continuous coating of Ultra High Molecular Weight Polyethylene (UHMWPE) that has better wearing properties, such as, abrasion resistance, chemical resistance, oil resistance, ageing resistance, ozone resistance, surface temperature resistance, fatigue property at elevated temperature, low absorption of water, low gas permeability, resistivity, adhesiveness in connection with glueing and lamination of the polymer, than coatings according to the prior art. While the invention has been described in connection with specific embodiments thereof, it will be understood that it is capable of further modification, and this application is intended to cover any variations, uses, or adaptations of the invention following, in general, the principles of the invention and including such departures from the present disclosure as come within known or customary practice in the art to which the invention pertains and as may be applied to the essential features hereinabove set forth, and as fall within the scope of the appended claims.

## Claims

1. Method of coating a polymeric material (A)
**charachterized in** the steps of :
(i) extruding (30) said polymeric material (A) to an extruded profile;
(ii) applying (35) a non-continuous coating (10) consisting of Ultra High Molecular Weight Polyethylene (UHMWPE) on said extruded profile, and
(iii) curing (37) said extruded profile with the non-continuous coating after step (ii).

2. Method according to claim 1
**charachterized by** performing said applying (35) said non-continuous coating (10) in an application chamber (D), designed to apply the non-continuous coating (10) of UHMWPE on the polymeric material (A).

3. Method according to claim 1 and 2
c**harachterized in** that said polymeric material comprises Ethylene Propylene Diene Monomer (EPDM) and/or Thermo-Plastic Elastomer (TPE), or compounds thereof.

4. Method according to any of claims 1 to 3
**charachterized in** that said extruded profile has a substantially planar or irregular shape.

5. Method according to any of the preceding claims
**charachterized in** that said applying (35) said non-continuous coating (10) of UHMWPE on said polymeric material comprises sprinkling, painting, or brushing.

6. Method according to any of claims 1 to 4
c**harachterized in** that said applying (35) of said non-continuous coating (10) of UHMWPE on said polymeric material comprises immersing said extruded profile into a bath of powder comprising UHMWPE.

7. Method according to any of the preceding claims
**charachterized in** that said UHMWPE is applied in the form of powder or micropowder.

8. Method according to any of the preceding claims
**charachterized by** partly coating said extruded profile with a foil and partly by the method according to claim 7.

9. Method according to any of claims 6-8
**charachterized by** electrostatically charging (32) said extruded profile and said powder against each other prior or during to said applying (35) said non-continuous coating (10).

## Patentansprüche

1. Verfahren zum Beschichten eines Polymermaterials (A), **gekennzeichnet durch** folgende Schritte:
(i) Extrudieren (30) des Polymermaterials (A) zu einem extrudierten Profil;
(ii) Aufbringen (35) einer nicht kontinuierlichen Beschichtung (10) aus ultrahochmolekularem Polyethylen (UHMWPE) auf das extrudierte Profil und
(iii) Härten (37) des extrudierten Profils mit der nicht kontinuierlichen Beschichtung nach Schritt (ii).

2. Verfahren nach Anspruch 1, **gekennzeichnet durch** Durchführen des Aufbringens (35) der nicht kontinuierlichen Beschichtung (10) in einer Applikationskammer (D), die zum Aufbringen der nicht kontinuierlichen Beschichtung (10) aus UHMWPE auf das Polymermaterial (A) konzipiert ist.

3. Verfahren nach Anspruch 1 und 2, **dadurch gekennzeichnet, dass** das Polymermaterial Ethylen-Propylen-Dien-Monomer (EPDM) und/oder thermoplastisches Elastomer (TPE) oder Compounds davon umfasst.

4. Verfahren nach einem der Ansprüche 1 bis 3, **dadurch gekennzeichnet, dass** das extrudierte Profil eine weitgehend planare oder unregelmäßige Gestalt aufweist.

5. Verfahren nach einem der vorhergehenden Ansprüche, **dadurch gekennzeichnet, dass** das Aufbringen (35) der nicht kontinuierlichen Beschichtung (10) aus UHMWPE auf das Polymermaterial Sprenkeln, Anstreichen oder Aufpinseln umfasst.

6. Verfahren nach einem der Ansprüche 1 bis 4, **dadurch gekennzeichnet, dass** das Aufbringen (35) der nicht kontinuierlichen Beschichtung (10) aus UHMWPE auf das Polymermaterial das Eintauchen des extrudierten Profils in ein Bad von UHMWPE umfassendem Pulver umfasst.

7. Verfahren nach einem der vorhergehenden Ansprüche, **dadurch gekennzeichnet, dass** das UHMWPE in Form von Pulver oder Mikropulver aufgebracht wird.

8. Verfahren nach einem der vorhergehenden Ansprüche, **gekennzeichnet durch** teilweises Beschichten des extrudierten Profils mit einer Folie und teilweises Beschichten **durch** das Verfahren nach Anspruch 7.

9. Verfahren nach einem der Ansprüche 6-8, **gekennzeichnet durch** elektrostatisches Aufladen (32) des extrudierten Profils und des Pulvers gegeneinander vor oder während des Aufbringens (35) der nicht kontinuierlichen Beschichtung (10).

## Revendications

1. Procédé d'enduction d'un matériau polymère (A) **caractérisé par** les étapes de
(i) extrusion (30) dudit matériau polymère (A) en profilé extrudé ;
(ii) application (35) d'un revêtement non continu (10) constitué de polyéthylène à très haut poids moléculaire (UHMWPE) sur ledit profilé extrudé, et
(iii) durcissement (37) dudit profilé extrudé avec le revêtement non continu après l'étape (ii).

2. Procédé selon la revendication 1 **caractérisé par** la conduite de ladite application (35) dudit revêtement non continu (10) dans une chambre d'application (D), conçue pour appliquer le revêtement non continu (10) de UHMWPE sur le matériau polymère (A).

3. Procédé selon la revendication 1 et 2 **caractérisé en ce que** ledit matériau polymère comprend un monomère éthylène-propylène-diène (EPDM) et/ou un élastomère thermoplastique (TPE), ou des composés de ceux-ci.

4. Procédé selon l'une quelconque des revendications 1 à 3 **caractérisé en ce que** ledit profilé extrudé a une forme sensiblement plane ou irrégulière.

5. Procédé selon l'une quelconque des revendications précédentes **caractérisé en ce que** ladite application (35) dudit revêtement non continu (10) de UHMWPE sur ledit matériau polymère comprend l'aspersion, la peinture, ou le brossage.

6. Procédé selon l'une quelconque des revendications 1 à 4 **caractérisé en ce que** ladite application (35) dudit revêtement non continu (10) de UHMWPE sur ledit matériau polymère comprend l'immersion dudit profilé extrudé dans un bain de poudre comprenant UHMWPE.

7. Procédé selon l'une quelconque des revendications précédentes **caractérisé en ce que** ledit UHMWPE est appliqué sous la forme de poudre ou micropoudre.

8. Procédé selon l'une quelconque des revendications précédentes **caractérisé par** l'enduction partielle dudit profilé extrudé avec une feuille d'aluminium et partiellement par le procédé selon la revendication 7.

9. Procédé selon l'une quelconque des revendications 6 à 8 **caractérisé par** la charge électrostatique (32) dudit profilé extrudé et de ladite poudre l'un contre l'autre avant ou pendant ladite application (35) dudit revêtement non continu (10).
